(19) **Europäisches Patentamt**
**European Patent Office**
**Office européen des brevets**

(11) **EP 4 447 465 A1**

(12) **EUROPEAN PATENT APPLICATION**
published in accordance with Art. 153(4) EPC

(43) Date of publication:
**16.10.2024 Bulletin 2024/42**

(21) Application number: **22903001.0**

(22) Date of filing: **11.10.2022**

(51) International Patent Classification (IPC):
***H04N 21/4402*** *(2011.01)*

(52) Cooperative Patent Classification (CPC):
**G06T 3/4007; G06N 3/02; G06N 3/04; G06N 3/045;**
**G06N 3/084; G06T 3/4046; G06T 7/269;**
**H04N 21/4402;** G06T 2207/20081;
G06T 2207/20084; Y02T 10/40

(86) International application number:
**PCT/CN2022/124567**

(87) International publication number:
**WO 2023/103576 (15.06.2023 Gazette 2023/24)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **09.12.2021 CN 202111500576**

(71) Applicant: **Tencent Technology (Shenzhen)**
**Company Limited**
**Shenzhen, Guangdong 518057 (CN)**

(72) Inventors:
• **JIANG, Boyuan**
**Shenzhen, Guangdong 518057 (CN)**
• **KONG, Lingtong**
**Shenzhen, Guangdong 518057 (CN)**

• **LUO, Donghao**
**Shenzhen, Guangdong 518057 (CN)**
• **TAI, Ying**
**Shenzhen, Guangdong 518057 (CN)**
• **WANG, Chengjie**
**Shenzhen, Guangdong 518057 (CN)**
• **HUANG, Xiaoming**
**Shenzhen, Guangdong 518057 (CN)**
• **LI, Jilin**
**Shenzhen, Guangdong 518057 (CN)**
• **HUANG, Feiyue**
**Shenzhen, Guangdong 518057 (CN)**
• **WU, Yongjian**
**Shenzhen, Guangdong 518057 (CN)**

(74) Representative: **EP&C**
**P.O. Box 3241**
**2280 GE Rijswijk (NL)**

(54) **VIDEO PROCESSING METHOD AND APPARATUS, AND COMPUTER DEVICE AND STORAGE MEDIUM**

(57) Disclosed in the present application is a video processing method. The method comprises: acquiring a first video frame and a second video frame in a target video, wherein the first video frame is a previous frame of the second video frame; inputting the first video frame and the second video frame into a pre-trained target neural network, and outputting a target intermediate video frame, wherein the target neural network is obtained by means of training on the basis of an optical flow distillation constraint and a feature consistency constraint; and interpolating the target intermediate video frame between the first video frame and the second video frame.

Obtain a first video frame and a second video frame from a target video — S110

Input the first video frame and the second video frame to a pre-trained target neural network, and obtain a target intermediate video frame output by the target neural network — S120

Insert the target intermediate video frame between the first video frame and the second video frame — S130

FIG. 1

EP 4 447 465 A1

**Description**

RELATED APPLICATION

This application claims priority to Chinese Patent Application No. 202111500576.0, filed with the China National Intellectual Property Administration on December 9, 2021, and entitled "VIDEO PROCESSING METHOD AND APPARATUS, COMPUTER DEVICE, AND STORAGE MEDIUM", which is incorporated herein by reference in its entirety.

FIELD OF THE TECHNOLOGY

The present disclosure relates to the field of computer technologies, and in particular, to a video processing method and apparatus, a computer device, and a storage medium.

BACKGROUND OF THE DISCLOSURE

With the rapid development of a computer vision technology, people have increasingly high requirements for a video frame rate, and videos with high frame rates can greatly improve the watching experience of a user. To watch videos with higher fluency/clarity, people have increased the frame rate of videos captured by an existing camera from 25 FPS to 60 FPS, and then to 240 FPS or even higher. However, relying solely on hardware iteration of a camera to increase the frame rate is costly. Therefore, a video frame interpolation technology comes into being.

The purpose of video frame interpolation is to generate videos with high frame rates according to videos with low frame rates. A general operation of video frame interpolation is to generate an image of an intermediate frame between images of two adjacent video frames. At present, most video frame interpolation methods include modeling an object motion to estimate an optical flow of the intermediate frame. Considering a complex motion process of an object in a true scene, the existing methods usually use a correction network to correct the estimated optical flow of the intermediate frame.

SUMMARY

In view of the above problems, the present disclosure provides a video processing method and apparatus, a computer device, and a storage medium.

Some embodiments of the present disclosure provide a video processing method, including: obtaining a first video frame and a second video frame in a target video, the first video frame being a previous frame of the second video frame; inputting the first video frame and the second video frame to a pre-trained target neural network, and obtaining a target intermediate video frame output by the target neural network, the target neural network being trained based on an optical flow distillation constraint and a feature consistency constraint, the optical flow distillation constraint being a constraint established between optical flows of intermediate video frames generated by the target neural network and optical flows of ground truth sample intermediate video frames, and the feature consistency constraint being a constraint established between features of the intermediate video frames and features of the ground truth sample intermediate video frames; and inserting the target intermediate video frame between the first video frame and the second video frame.

Some embodiments of the present disclosure provide a video processing apparatus, including: an obtaining module, configured to obtain a first video frame and a second video frame in a target video, the first video frame being a previous frame of the second video frame; an outputting module, configured to: input the first video frame and the second video frame to a pre-trained target neural network, and obtain a target intermediate video frame output by the target neural network, the target neural network being trained based on an optical flow distillation constraint and a feature consistency constraint, the optical flow distillation constraint being a constraint established between optical flows of intermediate video frames generated by the target neural network and optical flows of ground truth sample intermediate video frames, and the feature consistency constraint being a constraint established between features of the intermediate video frames and features of the ground truth sample intermediate video frames; and a frame interpolation module, configured to insert the target intermediate video frame between the first video frame and the second video frame.

Some embodiments of the present disclosure further provide a computer device, including a processor and a memory. The memory stores computer program instructions, and the computer program instructions are invoked by the processor to implement the video processing method provided in the above first aspect.

Some embodiments of the present disclosure further provide a computer-readable storage medium. The computer-readable storage medium stores program codes. The program codes are run on a processor to implement the video processing method provided in the above first aspect.

Some embodiments of the present disclosure further provide a computer program product or a computer program. The computer program product or the computer program includes computer instructions stored in a storage medium. A processor of a computer device reads the computer instructions from the storage medium and executes the computer instructions, causing the computer to implement the steps in the above video processing method.

The target neural network used in the technical solutions of the present disclosure is obtained by training based on the optical flow distillation constraint and the feature consistency constraint. Therefore, knowledge of a pre-trained optical flow network is transferred to learning of the target neural network through the optical flow distillation constraint, thereby eliminating dependency on an external optical flow network. In addition, the network can learn more intermediate frame information through the feature consistency constraint. Thus, the target intermediate video frame is inserted between the first video frame and the second video frame, which greatly increases the speed of video frame interpolation and enhances the display effect of video frame interpolation.

BRIEF DESCRIPTION OF THE DRAWINGS

In order to illustrate the technical solutions in the embodiments of the present disclosure more clearly, the following briefly introduces the accompanying drawings required in the description of the embodiments. Obviously, the accompanying drawings described below are only some embodiments of the present disclosure. Those of ordinary skill in the art can also obtain other drawings according to the drawings without any creative work.

FIG. 1 shows a flowchart of a video processing method provided according to some embodiments of the present disclosure.

FIG. 2 shows a flowchart of another video processing method provided according to some embodiments of the present disclosure.

FIG. 3 shows a diagram of a network architecture of a video processing method provided according to some embodiments of the present disclosure.

FIG. 4 shows a flowchart of a step of generating a first target feature and a second target feature in FIG. 2.

FIG. 5 shows a flowchart of a step of generating a first target optical flow and a second target optical flow in FIG. 2.

FIG. 6 shows a flowchart of a step of generating a first candidate video frame and a second candidate video frame in FIG. 2.

FIG. 7 shows a flowchart of still another video processing method provided according to some embodiments of the present disclosure.

FIG. 8 shows a flowchart of a step of calculating a first loss value in FIG. 7.

FIG. 9 shows a flowchart of a step of calculating a second loss value in FIG. 7.

FIG. 10 shows a diagram of speed-effect comparison of a frame interpolation method provided according to some embodiments of the present disclosure.

FIG. 11 shows a diagram of a visualization effect of video frame interpolation provided according to some embodiments of the present disclosure.

FIG. 12 shows a diagram of a test result of video frame interpolation provided according to some embodiments of the present disclosure.

FIG. 13 shows a module block diagram of a video processing apparatus provided according to some embodiments of the present disclosure.

FIG. 14 shows a module block diagram of a computer device provided according to some embodiments of the present disclosure.

FIG. 15 shows a module block diagram of a computer-readable storage medium provided according to some embodiments of the present disclosure.

FIG. 16 is a schematic diagram of a network environment provided according to some embodiments of the present disclosure.

DESCRIPTION OF EMBODIMENTS

Implementations of the present disclosure are described in detail below, and examples of the implementations are shown in accompanying drawings, where the same or similar elements or the elements having same or similar functions are denoted by the same or similar reference numerals throughout the description. The implementations described below with reference to the accompanying drawings are exemplary and used only for explaining the present disclosure, and should not be construed as a limitation on the present disclosure.

To make a person in the art understand the solutions of the present disclosure better, the following clearly and completely describes the technical solutions in the embodiments of the present disclosure with reference to the accompanying drawings in the embodiments of the present disclosure. Apparently, the described embodiments are only some embodiments rather than all the embodiments of the present disclosure. Based on the embodiments in the present disclosure, all other embodiments obtained by those skilled in the art without creative work all fall within the protection scope of the present disclosure.

In order to improve the experience of a user for watching videos, terminal service providers usually use a video frame interpolation technology to optimize videos, so that the fluency of video pictures will be significantly improved. Video frame interpolation algorithms can be roughly divided into three categories according to different synthesis methods of intermediate frames (intermediate video frames): an optical flow-based method, a kernel-based method, and an image generation-based method.

The kernel-based method generates images by performing convolution on local blocks near each output pixel, and synthesizes intermediate frames by performing a convolution operation on the local blocks around each output pixel. However, this method cannot handle large motions that exceed a size of a kernel, and typically has high computation costs. The image generation-based method can generate more detailed texture structures, but if there are objects with large motions in a video, problems such as ghosting may occur, which affects the watching experience of the video after frame interpolation.

Due to the influence of Convolutional Neural Networks (CNNs) in deep learning, which can understand a motion law of pixel values in images over time by predicting optical flows, most existing video frame interpolation algorithms are the optical flow-based (an optical flow is an instantaneous speed of a pixel motion of a spatial moving object on an observed imaging plane) methods. For example, a Depth-Aware Video Frame Interpolation (DAIN) algorithm includes an optical flow estimation module, a deep estimation module, a feature extraction module, and an interpolation kernel estimation module. Corresponding optical flow maps, depth maps, feature maps, and interpolation kernels of inputted previous and latter frame images are separately obtained through the four modules. Then, optical flows and a local interpolation kernel are used to twist the inputted frames, the depth maps, and content features, and transmit them into a target frame synthesis network to synthesize an outputted frame.

The DAIN algorithm estimates an optical flow of an intermediate frame relative to a previous frame by estimating optical flows of two adjacent frames and using linear hypothesis. This algorithm is only applicable to a case where an object has a uniform motion, otherwise, the optical flow of the intermediate frame estimated through the linear hypothesis will deviate significantly relative to an actual value. In response to this issue, a Quadratic Video Interpolation (QVI) algorithm is used to estimate an acceleration of an object by using three frames and then estimate an optical flow of an intermediate frame by using a uniformly accelerated motion.

Because motions of objects in a true scene are very complex, relying solely on uniform motion or more complex uniformly accelerated motion to perform motion modeling of a single mode cannot cover all situations. For this reason, existing methods usually combine a correction network to correct the estimated optical flow of the intermediate frame. However, this combination manner will significantly increase the temporal and spatial complexity of a neural network, thereby prolonging the inference time and hindering the deployment of the frame interpolation algorithm in practical application scenes.

In response to the above issues, a video processing method is provided according to embodiments of the present disclosure. Embodiments of the method can obtain a first video frame and a second video frame from a target video, input the first video frame and the second video frame to a pre-trained target neural network, and obtain a target intermediate video frame output by the target neural network. The target neural network can be trained based on an optical flow distillation constraint and a feature consistency constraint. Further, embodiments of the method can insert the target intermediate video frame between the first video frame and the second video frame. Thus, by inputting two adjacent video frames to the pre-trained target neural network obtained by training based on the optical flow distillation constraint and the feature consistency constraint, the target intermediate video frame is outputted for frame interpolation, so that a more accurate target intermediate video frame can be quickly outputted, which facilitates practical application of the video frame interpolation algorithm. The specific video processing method will be explained in detail in subsequent embodiments.

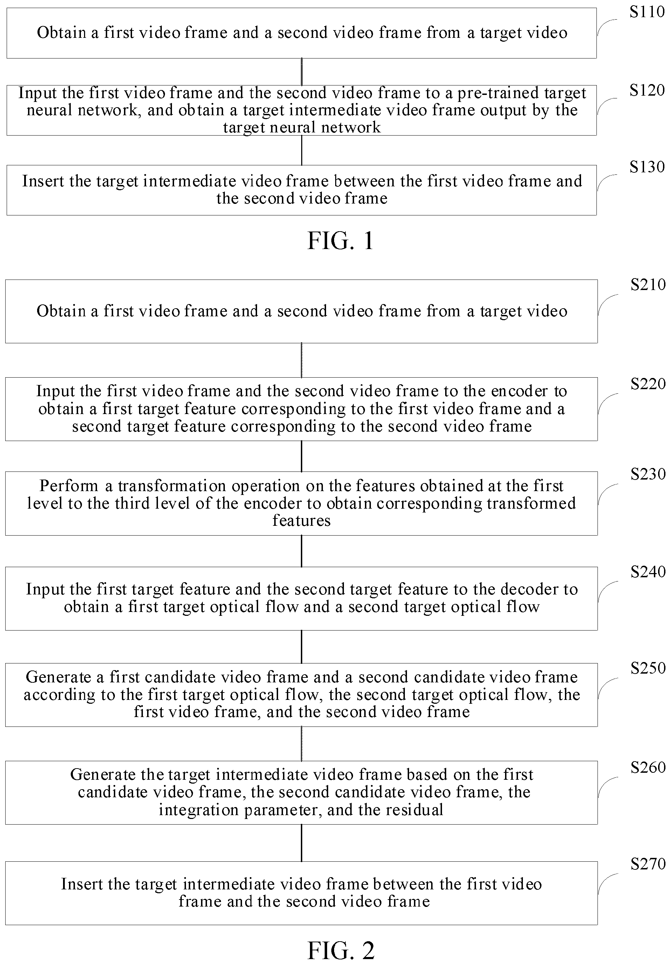

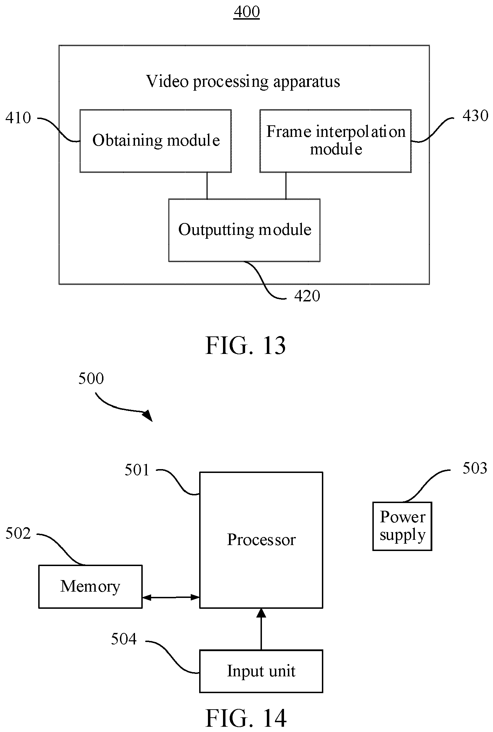

Referring to FIG. 1, FIG. 1 shows a flowchart of a video processing method provided according to some embodiments of the present disclosure. In one embodiment, the video processing method is applied to a video processing apparatus 400 as shown in FIG. 13 and a computer device 500 (FIG. 14) with the video processing apparatus 400. A computer device is taken as an example below to explain a specific flow of this embodiment.

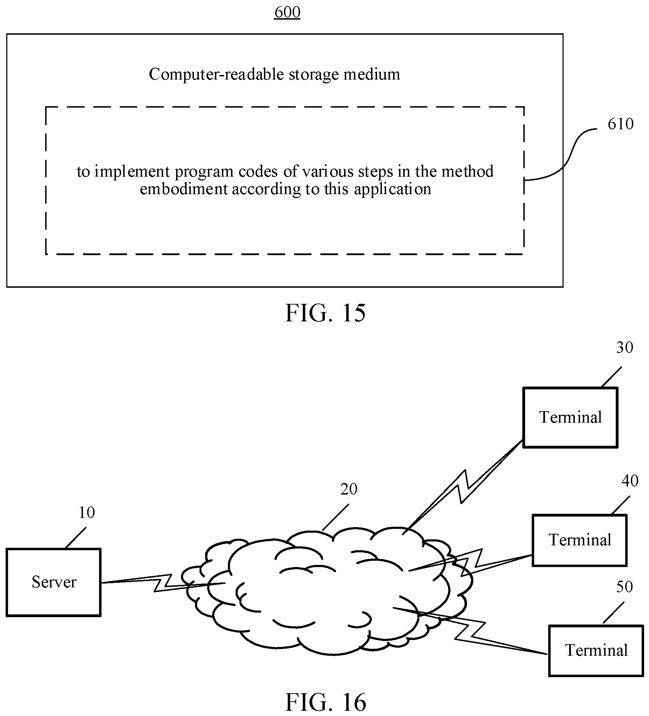

Of course, it can be understood that the computer device applied to the embodiments may be a server, a terminal, or the like. For example, the computer device may be any one or more devices among a server 10, a terminal 30, a terminal 40, and a terminal 50 in FIG. 16. FIG. 16 is a schematic diagram of a network environment provided according to some embodiments of the present disclosure. The server 10 may be an independent physical server, or may be a server cluster or a distributed system formed by a plurality of physical servers, or may be a cloud server that provides basic cloud computing services such as cloud services, cloud databases, cloud computing, cloud functions, cloud storage, network services, cloud communication, middleware services, domain name services, security services, Content Delivery Networks (CDNs), block chains, big data, and artificial intelligence platforms. The terminals 30 to 50 may be a smartphone, a tablet computer, a notebook computer, a desktop computer, a smart speaker, a smartwatch, or the like, but are not limited thereto. In an actual scene, a plurality of servers and a plurality of terminals may be deployed in a network environment. For clarity, FIG. 16 only shows an exemplary device.

The following describes in detail the flow shown in FIG. 1. The video processing method may specifically include the following steps.

Step S110: Obtain a first video frame and a second video frame from a target video.

In some embodiments of the present disclosure, an electronic device may obtain the target video that require frame interpolation. The target video may be a video frame sequence composed of consecutive video frames. It can be understood that each video frame is a frame image. The first video frame and the second video frame belong to the video frame sequence. The first video frame is a previous frame of the second video frame (e.g., a frame immediately preceding the second video frame, a neighboring frame preceding the second video frame).

In one embodiment, the computer device may download the target video through a network, and then obtain the first video frame and the second video frame from the video frame sequence of the target video. For example, a terminal device may retrieve the target video from a server through an Application Programming Interface (API). The server may be a specific server that stores or generates video frames for different application scenes. The terminal device may include computer devices with storage and computing functions, such as a smartphone and a tablet computer.

For example, in a live streaming viewing scene, a client obtains a live video in true time online from a media resource server of a live streaming platform through an API, and then obtains two adjacent video frames from a video frame sequence of the live video as a first video frame and a second video frame. In an application scene of using a virtual digital person for smart makeup, a smartphone may obtain a digital person frame video generated by a server through an API provided by smart makeup application software, and then perform a frame interpolation operation on the digital person frame video.

In another embodiment, the computer device may obtain the target video locally, that is, offline from a locally stored file. For example, when the computer device is a notebook computer, the notebook computer may obtain the target video from a hard disk, that is, the notebook computer stores the video in a local folder in advance, or downloads the video from a network and stores it to a local folder. To perform frame interpolation on the video, the notebook computer reads the video from the folder, and then obtains two adjacent video frames from a video frame sequence of the local video as the first video frame and the second video frame.

Step S120: Input the first video frame and the second video frame to a pre-trained target neural network, and obtain a target intermediate video frame output by the target neural network.

When the computer device obtains the first video frame and the second video frame from the target video, the computer device may input the first video frame and the second video frame to the pre-trained target neural network to generate a target intermediate video frame. The target intermediate video frame refers to a new video frame $\hat{I}_t$ to be inserted between the two consecutive video frames: the first video frame $I_{t \to 0}$ and the second video frame $I_{t \to 1}$.

In some embodiments of the present disclosure, the target neural network is trained based on an optical flow distillation constraint and a feature consistency constraint. The optical flow distillation constraint is a constraint established between optical flows of intermediate video frames generated by a network and optical flows of ground truth sample intermediate video frames in the training process of the target neural network. The feature consistency constraint essentially refers to a constraint established between features of the intermediate video frames generated by the network and features of the ground truth sample intermediate video frames in the training process of the target neural network. The process of training the target neural network based on the optical flow distillation constraint and the feature consistency constraint may eliminate dependency on an external optical flow network, thereby improving the efficiency of a network for generating target intermediate videos. At the same time, more information about intermediate frames can be learned, thereby improving the visualization effect of video frame interpolation. The target neural network may be composed of an encoder and a decoder.

In some embodiments, after obtaining the first video frame $I_{t\to0}$ and the second video frame $I_{t\to1}$ of the target video, the computer device may input the first video frame $I_{t\to0}$ and the second video frame $I_{t\to1}$ to the encoder of the target neural network, and the encoder performs feature extraction on images of the video frames to separately obtain features of the images of the video frames corresponding to the first video frame $I_{t\to0}$ and the second video frame $I_{t\to1}$. Further, the computer device inputs the corresponding features of the images of the video frames to the decoder to predict two optical flows of a new video frame $\hat{I}_t$ to be inserted to the first video frame $I_{t\to0}$ and to the second video frame $I_{t\to1}$, respectively. Further, the computer device generates a target intermediate video frame according to the above two optical flows.

Step S130: Insert the target intermediate video frame between the first video frame and the second video frame.

In one embodiment, the computer device may insert the obtained target intermediate video frame $\hat{I}_t$ between the first video frame $I_0$ and the second video frame $I_1$ after generating the target intermediate video frame $\hat{I}_t$ through the target neural network. In some embodiments, in an actual video frame interpolation scene, the computer device may select multiple pairs of two adjacent video frames from the target video, and interpolate the intermediate video frame between the two adjacent video frames, thereby improving the fluency and clarity of the target video.

For example, to avoid a feeling of skipping frames in a piece of animation played by a computer, a video frame interpolation operation can be performed on a video frame sequence $\{I_0, I_1, I_2, I_3 \cdots, I_{n+1}\}$ of the animation, where n may be a time sequence of video frames of this piece of animation. The corresponding target intermediate video frames $\{I_{0.5}, I_{1.5}, I_{2.5}, \ldots, I_n\}$ may be inserted between every two adjacent video frames $\{I_0, I_1\}, \{I_1, I_2\}, \{I_2, I_3\}, \cdots,$ and $\{I_{n-1}, I_{n+1}\}$ of the video frame time sequence of the animation.

In some embodiments of the present disclosure, the computer device may obtain the first video frame and the second video frame from the target video, input the first video frame and the second video frame to the pre-trained target neural network, output the target intermediate video frame. The target neural network is trained based on an optical flow distillation constraint and a feature consistency constraint. The computer device inserts the target intermediate video frame between the first video frame and the second video frame. Therefore, knowledge of a pre-trained optical flow network is transferred to learning of the target neural network through the optical flow distillation constraint, thereby eliminating dependency on an external optical flow network. In addition, the network can learn more intermediate frame information through the feature consistency constraint, thereby improving the efficiency of generating an optical flow from an intermediate frame to an adjacent frame.

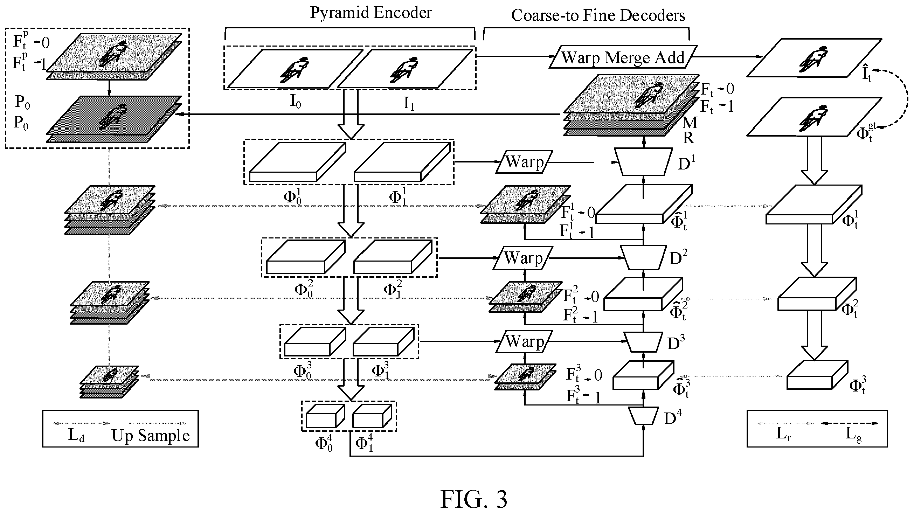

Referring to FIG. 2, FIG. 2 shows another video processing method provided according to some embodiments of the present disclosure. In some embodiments, the video processing method is applied to a target neural network as shown in FIG. 3. A detailed description will be made below for a network architecture of the target neural network shown in FIG. 3.

In some embodiments of the present disclosure, an Artificial Intelligence (AI) technology is used. The AI technology involves a theory, a method, a technology, and an application system that use a digital computer or a machine controlled by the digital computer to simulate, extend, and expand human intelligence, sense an environment, obtain knowledge, and use the knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The AI technology is a comprehensive discipline, and relates to a wide range of fields including both hardware-level technologies and software-level technologies. The basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a speech processing technology, a natural language processing technology, and machine learning/deep learning.

The solutions provided in the embodiments of the present disclosure involve a CV technology in AI, and will be explained through the following embodiments:

The CV technology is a science that studies how to use a machine to "see", and furthermore, that uses a camera and a computer to replace human eyes to perform machine vision such as recognition, tracking, and measurement on a target, and further perform graphic processing, so that the computer processes the target into an image more suitable for human eyes to observe, or an image transmitted to an instrument for detection. As a scientific discipline, CV studies related theories and technologies and attempts to establish an AI system that can obtain information from images or multidimensional data. The CV technology usually includes image processing, image recognition, image semantic understanding, image retrieval, Optical Character Recognition (OCR), video processing, video semantic understanding, video content/behavior recognition, 3-dimension (3D) object reconstruction, 3D technology, virtual reality, augmented reality, synchronous positioning, map construction and other technologies, as well as common face recognition, fingerprint recognition and other biometric feature recognition technologies.

In one embodiment, the target neural network may include an encoder and a decoder. In some embodiments, the encoder may use a pyramid encoder, and the decoder may use a coarse-to-fine decoder.

In some embodiments, the encoder may be composed of four convolution blocks. Each convolution block includes two convolution layers with convolution kernel sizes of 3×3 and step lengths of 2 and 1, respectively. Quantities of channels in the convolution layers of the four convolution blocks are 32, 48, 72, and 96, respectively. The decoder is also composed of four convolution blocks. Each convolution block includes two convolution layers with convolution kernel sizes of 3×3 and 4×4 and step lengths of 1 and 1/2, respectively. A quantity of channels of each convolution block is consistent with a quantity of channels of the convolution block of the encoder at the corresponding level. For example, the quantity of channels of convolution block $E^1$ of a first level of the encoder is correspondingly the same as the quantity of channels of convolution block $D^1$ of a first level of the decoder. A quantity of the convolution blocks of the encoder and the decoder or a quantity of the levels of the encoder/decoder may be set according to a resolution (Res) of the video frames of the inputted target video. In some embodiments, the quantity of the convolution blocks or the quantity num of the levels of the encoder/decoder satisfies $2^{num}<$ Res, which will not be limited here. For example, when the resolution of the video frames of the target video is 256×256, at most eight levels can be set for the encoder/decoder.

A detailed explanation will be made below in combination with the flow shown in FIG. 2 and the diagram of the network architecture shown in FIG. 3. The video processing method may include the following steps.

Step S210: Obtain a first video frame and a second video frame from a target video.

In the embodiments, a specific implementation of step S210 may refer to the explanation of step S 110 provided in the above embodiments, and will not be repeated here.

Step S220: Input the first video frame and the second video frame to the encoder to obtain a first target feature corresponding to the first video frame and a second target feature corresponding to the second video frame.

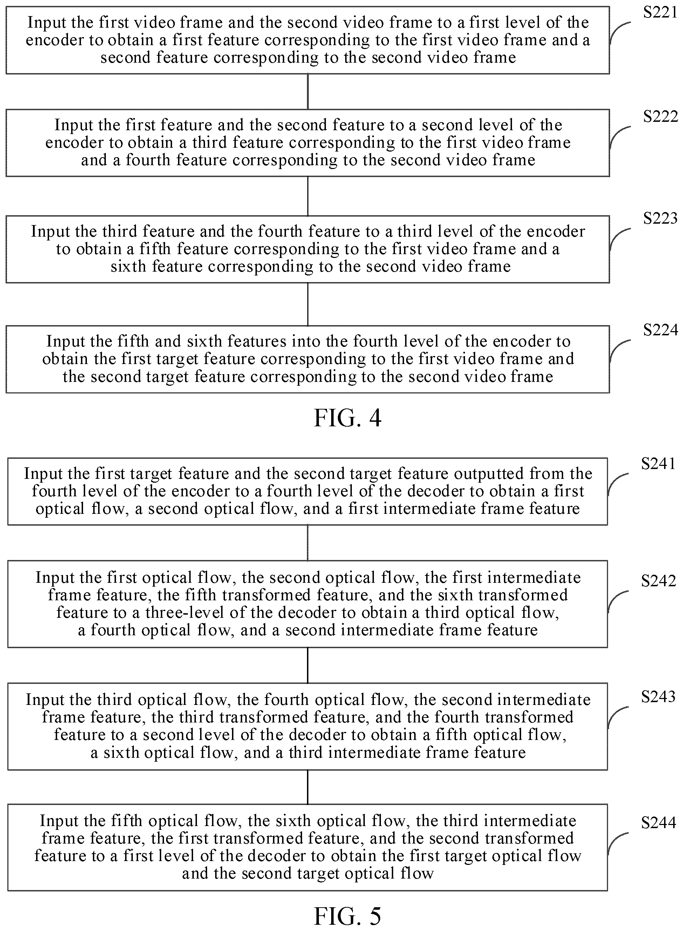

In some embodiments of the present disclosure, the first target feature refers to a feature of a video frame outputted by the convolution block of the last level of the encoder after the first video frame is encoded by the encoder. The second target feature refers to a feature of a video frame outputted by the convolution block of the last level of the encoder after the second video frame is encoded by the encoder. For example, referring to FIG. 4, step S220 may include step S221 to step S224.

Step S221: Input the first video frame and the second video frame to a first level of the encoder to obtain a first feature corresponding to the first video frame and a second feature corresponding to the second video frame.

Step S222: Input the first feature and the second feature to a second level of the encoder to obtain a third feature corresponding to the first video frame and a fourth feature corresponding to the second video frame.

Step S223: Input the third feature and the fourth feature to a third level of the encoder to obtain a fifth feature corresponding to the first video frame and a sixth feature corresponding to the second video frame.

Step S224: Input the fifth feature and the sixth feature to a fourth level of the encoder to obtain the first target feature corresponding to the first video frame and the second target feature corresponding to the second video frame.

In order to obtain more image feature information from the first video frame and the second video frame, some embodiments of the present disclosure use the pyramid encoder to obtain deep image feature information from image information of the inputted first video frame and second video frame.

In one embodiment, the computer device may separately obtain four pairs of pyramid features $\{\Phi_0^k, \Phi_1^k\}$ with different resolutions and quantities of channels from the convolution blocks of each level by inputting two adjacent video frames to the various levels of the pyramid encoder in sequence, where k is the quantity of the levels of the encoder. For example, the first video frame $I_0$ and the second video frame $I_1$ are inputted to convolution block $E^1$ of the first level of the pyramid encoder, to obtain the first feature $\Phi_0^1$ corresponding to the first video frame $I_0$ and the second feature $\Phi_1^1$ corresponding to the second video frame $I_1$. The first feature $\Phi_0^1$ and the second feature $\Phi_1^1$ are inputted to convolution block $E^2$ of the second level to obtain the third feature $\Phi_0^2$ and the fourth feature $\Phi_1^2$. The third feature $\Phi_0^2$ and the fourth feature $\Phi_1^2$ are inputted to convolution block $E^3$ of the third level to obtain the fifth feature $\Phi_0^3$ and the sixth feature $\Phi_1^3$. The fifth feature $\Phi_0^3$ and the sixth feature $\Phi_1^3$ are inputted to convolution block $E^4$ of the fourth level (the lowest level) to obtain the first target feature $\Phi_0^4$ and the second target feature $\Phi_1^4$.

Step S230: Perform a transformation operation on the features obtained at the first level to the third level of the encoder to obtain transformed features.

The transformation operation is a mathematical operation (Warp operation) that performs feature transformation on feature data. In some embodiments of the present disclosure, it is used for transforming the video frame features generated by the convolution blocks of the encoder into inputted features that can be used by the decoder.

In one embodiment, after obtaining the pyramid features $\{\Phi_0^k,\ \Phi_1^k\}$ corresponding to the various levels of the encoder, the transformation operation can be performed on the features obtained at the first level to the third level of the encoder to obtain the transformed features $\{\widetilde{\Phi}_0^k,\ \widetilde{\Phi}_1^k\}$. For example, the transformation operation is performed on the first feature $\Phi_0^1$ and the second feature $\Phi_1^1$ of the first level to obtain the first transformed feature $\widetilde{\Phi}_0^1$ and the second transformed feature $\widetilde{\Phi}_1^1$. Further, the transformation operation is performed on the third feature $\Phi_0^2$ and the fourth feature $\Phi_1^2$ of the second level to obtain the third transformed feature $\widetilde{\Phi}_0^2$ and the fourth transformed feature $\widetilde{\Phi}_1^2$. The transformation operation is performed on the fifth feature $\Phi_0^3$ and the sixth feature $\Phi_1^3$ of the third level to obtain the fifth transformed feature $\widetilde{\Phi}_0^3$ and the sixth transformed feature $\widetilde{\Phi}_1^3$.

Step S240: Input the first target feature and the second target feature to the decoder to obtain a first target optical flow and a second target optical flow.

In some embodiments, after the deep image feature information is extracted from the image information of the first video frame and the second video frame inputted by the encoder, the computer device may use the decoder to calculate the features extracted by the encoder, so as to predict optical flows from the to-be-generated target intermediate video frame to two video frames adjacent to the to-be-generated target intermediate video frame, that is, the first target optical flow and the second target optical flow. For example, referring to FIG. 5, step S240 may include step S241 to step S244.

Step S241: Input the first target feature and the second target feature outputted from the fourth level of the encoder to a fourth level of the decoder to obtain a first optical flow, a second optical flow, and a first intermediate frame feature.

Step S242: Input the first optical flow, the second optical flow, the first intermediate frame feature, the fifth transformed feature, and the sixth transformed feature to the third level of the decoder to obtain a third optical flow, a fourth optical flow, and a second intermediate frame feature.

Step S243: Input the third optical flow, the fourth optical flow, the second intermediate frame feature, the third transformed feature, and the fourth transformed feature to a second level of the decoder to obtain a fifth optical flow, a sixth optical flow, and a third intermediate frame feature.

Step S244: Input the fifth optical flow, the sixth optical flow, the third intermediate frame feature, the first transformed feature, and the second transformed feature to a first level of the decoder to obtain the first target optical flow and the second target optical flow, as well as an integration parameter and a residual R.

In one embodiment, the computer device may input the first target feature $\Phi_0^4$ and the second target feature $\Phi_1^4$ outputted from the fourth level of the encoder to convolution block $D^4$ of the fourth level of the decoder to obtain the first optical flow $F_{t\to0}^3$, the second optical flow $F_{t\to1}^3$, and the first intermediate frame feature $\widehat{\Phi}_t^3$. The computer device inputs the first optical flow $F_{t\to0}^3$, the second optical flow $F_{t\to1}^3$, the first intermediate frame feature $\widehat{\Phi}_t^3$, the fifth transformed feature $\widetilde{\Phi}_0^3$, and the sixth transformed feature $\widetilde{\Phi}_1^3$ are input to convolution block $D^3$ of the third level of the decoder to obtain the third optical flow $F_{t\to0}^2$, the fourth optical flow $F_{t\to1}^2$, and the second intermediate frame feature $\widehat{\Phi}_t^2$. The computer device inputs the third optical flow $F_{t\to0}^2$, the fourth optical flow $F_{t\to1}^2$, the second intermediate frame feature $\widehat{\Phi}_t^2$, the third transformed feature $\widetilde{\Phi}_0^2$, and the fourth transformed feature $\widetilde{\Phi}_1^2$ to convolution block $D^2$ of the second level of the decoder to obtain a fifth optical flow $F_{t\to0}^1$, a sixth optical flow $F_{t\to1}^1$, and a third intermediate frame feature $\widehat{\Phi}_t^1$. The computer device inputs the fifth optical flow $F_{t\to0}^1$, the sixth optical flow $F_{t\to1}^1$, the third intermediate frame feature $\widehat{\Phi}_t^1$, the first transformed feature $\widetilde{\Phi}_0^1$, and the second transformed feature $\widetilde{\Phi}_1^1$ to convolution block $D^1$ of the first level of the decoder to obtain the first target optical flow $F_{t\to0}$ and the second target optical flow $F_{t \to 1}$, as well as the integration parameter (M) Mask and the residual R.

For example, a calculation process of inputting the first target feature and the second target feature to the decoder to obtain the first target optical flow and the second target optical flow may be in accordance with the following formulas:

$$[F_{t \to 0}^3, F_{t \to 1}^3, \widehat{\Phi}_t^3] = D^4([\Phi_0^4, \Phi_1^4])$$

$$[F_{t \to 0}^2, F_{t \to 1}^2, \widehat{\Phi}_t^2] = D^3([F_{t \to 0}^3, F_{t \to 1}^3, \widehat{\Phi}_t^3, \widetilde{\Phi}_0^3, \widetilde{\Phi}_1^3])$$

$$[F_{t \to 0}^1, F_{t \to 1}^1, \widehat{\Phi}_t^1] = D^2([F_{t \to 0}^2, F_{t \to 1}^2, \widehat{\Phi}_t^2, \widetilde{\Phi}_0^2, \widetilde{\Phi}_1^2])$$

$$[F_{t \to 0}, F_{t \to 1}, M, R] = D^1([F_{t \to 0}^1, F_{t \to 1}^1, \widehat{\Phi}_t^1, \widetilde{\Phi}_0^1, \widetilde{\Phi}_1^1])$$

Step S250: Generate a first candidate video frame and a second candidate video frame according to the first target optical flow, the second target optical flow, the first video frame, and the second video frame.

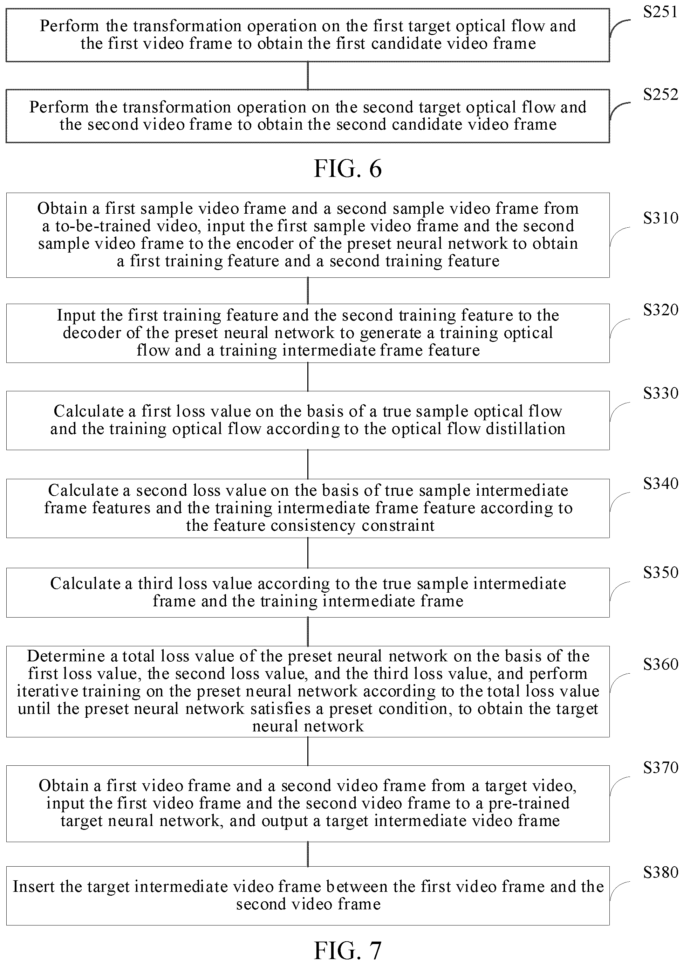

The first candidate video frame and the second candidate video frame are obtained from the optical flows corresponding to the first video frame and the second video frame through the transformation operation. For example, referring to FIG. 6, step S250 may include step S251 to step S252.

Step S251: Perform the transformation operation on the first target optical flow and the first video frame to obtain the first candidate video frame.

Step S252: Perform the transformation operation on the second target optical flow and the second video frame to obtain the second candidate video frame.

In one embodiment, a Warp operation may be used to calculate the first candidate video frame $\tilde{I}_0$ from the first target optical flow $F_{t \to 0}$ and the first video frame $I_0$. Similarly, the Warp operation may be used to calculate the second candidate video frame $\tilde{I}_1$ from the second target optical flow $F_{t \to 1}$ and the second video frame.

For example, a calculation process of the transformation operation may be in accordance with the following formulas:

$$\tilde{I}_0 = w(I_0, F_{t \to 0})$$

$$\tilde{I}_1 = w(I_1, F_{t \to 1})$$

where w is used to represent the Warp operation, also referred to as the transformation operation.

Step S260: Generate the target intermediate video frame based on the first candidate video frame, the second candidate video frame, the integration parameter, and the residual.

In one embodiment, the computer device may generate the target intermediate video frame $\hat{I}_t$ based on the first candidate video frame $\tilde{I}_0$, the second candidate video frame $\tilde{I}_1$, the integration parameter M, and the residual R. For example, a calculation process of generating the target intermediate video frame can be in accordance with the following formula:

$$\hat{I}_t = M \odot \tilde{I}_0 + (1 - M) \odot \tilde{I}_1 + R$$

where $\odot$ is an operator for element-wise multiplication. The integration parameter M is a single-channel merge mask with an element range of 0 to 1. The integration parameter M may adjust a mixing ratio according to a blockage. Through the integration parameter M, the first candidate video frame and the second candidate video frame may be integrated to generate the target intermediate video frame.

The residual R is a three-channel image residual that can compensate for contextual details. When a region of a target frame is blocked or undergoes a sudden brightness change in both views, the residual R may compensate for some details. For example, when image textures of a reconstructed video frame are not sharp enough, the residual R may supplement texture information, making images corresponding to the video frame displayed more realistic.

Step S270: Insert the target intermediate video frame between the first video frame and the second video frame.

In this embodiment, a specific implementation of step S270 may refer to the explanation of step S 130 provided in the above embodiments, and will not be repeated here.

In some embodiments of the present disclosure, the computer device may obtain the first video frame and the second video frame from the target video, and input the first video frame and the second video frame to the encoder to obtain the first target feature corresponding to the first video frame and the second target feature corresponding to the second video frame. The computer device performs the transformation operation on the features obtained at the first level to the third level of the encoder to obtain the transformed features, inputs the first target feature and the second target feature to the decoder to obtain the first target optical flow and the second target optical flow, thereby generating the target intermediate video frame based on the first candidate video frame, the second candidate video frame, the integration parameter, and the residual, and inserts the target intermediate video frame between the first video frame and the second video frame. Thus, video frame feature extraction, estimation of the optical flow of the intermediate video frame, and integration of the front and rear video frames are unified into a complete neural network, which can directly generate the optical flows from the intermediate frame to the adjacent frames, improve the efficiency of generating intermediate video frames, and facilitating processing more complex motion scenes.

As shown in FIG. 7, FIG. 7 schematically shows still another video processing method provided according to some embodiments of the present disclosure. The video processing method may include step S310 and step S390.

Considering that there is a high requirement for a speed of video frame interpolation in practical application scenes, the dependency on an external optical flow network to generate an optical flow can be eliminated, so that the target neural network directly generates an optical flow. This can effectively increase the speed of a network for generating an optical flow, thereby improving the speed of video frame interpolation. Therefore, the present disclosure transfers (knowledge distillation) the knowledge of the pre-trained optical flow network to the target neural network, thereby eliminating the dependency on the external optical flow network. In some embodiments of the present disclosure, the computer device may use the optical flow distillation constraint to ensure that the optical flow of the finally trained target neural network is almost consistent with the optical flow of the ground truth intermediate video frame generated by the pre-trained preset optical flow network.

Step S310: Obtain a first sample video frame and a second sample video frame from a video to be trained, and input the first sample video frame and the second sample video frame to the encoder of the preset neural network to obtain a first training feature and a second training feature.

For the target neural network in the aforementioned embodiments, some embodiments of the present disclosure also include a training method of the target neural network. The training of the target neural network may be carried out in advance according to an obtained training dataset. Subsequently, when video frame interpolation is required for the target video at each time, the trained target neural network can be used to generate the target intermediate video frame, instead of training the target neural network every time the target video is processed.

The video frame interpolation method provided in all embodiments of the present disclosure can use dataset Vimeo90K as a training set in the training process of the preset neural network. Vimeo90K is a large-scale, high-quality video dataset for video processing. The dataset contains 89800 video clips, covering a large number of scenes and actions. It is designed specifically for the following four video processing tasks: video frame interpolation, video denoising, video deblocking, and video super-resolution.

In some embodiments, according to requirements of the video processing tasks corresponding to the embodiments of the present disclosure, that is, video frame interpolation, a triplet dataset can be selected from the Vimeo90K. The triplet dataset is composed of 73171 three-frame video frame sequences with a fixed resolution of $448\times256$, extracted from a 15K selected video clip of the Vimeo90K.

In some embodiments of the present disclosure, the training sample set may include multiple videos to be trained. The videos to be trained include multiple video frames, and there may be a ground truth sample intermediate frame between two adjacent video frames. In some embodiments, a large number of videos to be trained may be obtained from an open source video database to construct a training sample set. The preset neural network refers to a network to be trained used for generating intermediate video frames. The preset neural network is the target neural network once it is trained.

In one embodiment, the computer device may obtain every two adjacent pieces of video frame data from the video to be trained as the first sample video frame and the second sample video frame. The first sample video frame and the second sample video frame can be simultaneously inputted to the encoder of the preset neural network, and then the lowest level (the fourth level) of the encoder outputs the first training feature corresponding to the first sample video frame and the second training feature corresponding to the second sample video frame.

Step S320: Input the first training feature and the second training feature to the decoder of the preset neural network to generate a training optical flow and a training intermediate frame feature.

The training optical flow refers to an optical flow corresponding to the first sample video frame and an optical flow corresponding to the second sample video frame, and is correspondingly generated by the convolution blocks of the various levels of the decoder of the preset neural network in the training process.

In one embodiment, the computer device may input the first training feature and the second training feature generated by the encoder to the decoder of the preset neural network, and then the convolution blocks at each level of the decoder generate the training optical flow

$$\check{F}_{t\to0}^k{}^{\prime}$$

corresponding to the first sample video frame and the training optical flow

$$\check{F}_{t\to1}^k$$

corresponding to the second sample video frame, where k is a quantity of the levels.

Step S330: Calculate a first loss value based on a ground truth sample optical flow and the training optical flow according to the optical flow distillation constraint.

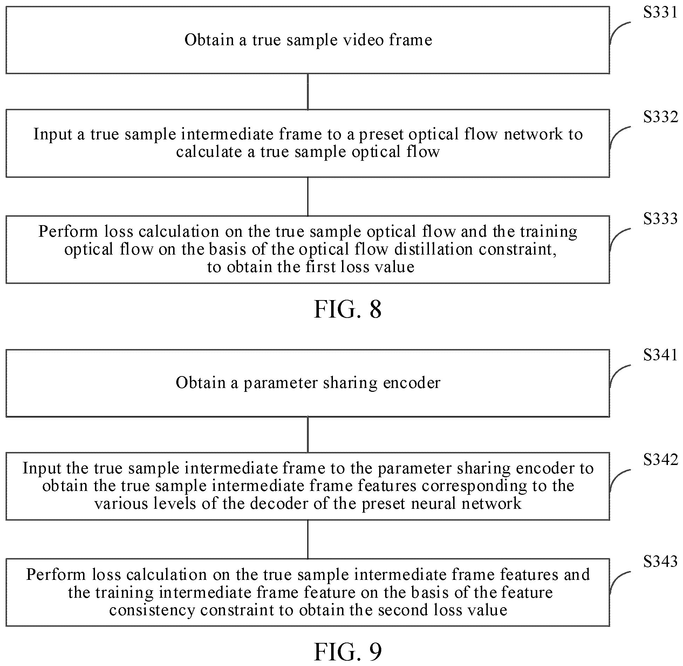

In order to cause the optical flow generated and learned by the preset neural network to be almost consistent with the optical flow of the ground truth intermediate video frame, the first loss value can be calculated based on the ground truth sample optical flow and the training optical flow according to the optical flow distillation constraint. For example, referring to FIG. 8, step S330 may include step S331 to step S333.

Step S331: Obtain a ground truth sample video frame.

Step S332: Input a ground truth sample intermediate frame to a preset optical flow network to calculate a ground truth sample optical flow.

The ground truth sample video frame includes a ground truth sample intermediate frame $I_t^{gt}$ and two video frames $I_{t\to0}^{gt}$ and $I_{t\to1}^{gt}$ adjacent to the ground truth sample intermediate frame. The preset optical flow network is a pre-trained optical flow network. The preset optical flow network is used for calculating a ground truth sample optical flow $F_{t\to0}^P$ from the ground truth sample intermediate frame $I_t^{gt}$ to its previous video frame $I_{t\to0}^{gt}$ and a ground truth sample optical flow $F_{t\to1}^P$ from the ground truth sample intermediate frame $I_t^{gt}$ to its latter video frame $I_{t\to1}^{gt}$.

In one embodiment, the computer device may obtain the ground truth sample video frames from the training sample set, and input the ground truth sample intermediate frame $I_t^{gt}$ and two video frames $I_{t\to0}^{gt}$ and $I_{t\to1}^{gt}$ adjacent to the ground truth sample intermediate frame to the preset optical flow network, thereby obtaining the ground truth sample optical flow $F_{t\to0}^P$ and the ground truth sample optical flow $F_{t\to1}^P$.

Step S333: Perform loss calculation on the ground truth sample optical flow and the training optical flow based on the optical flow distillation constraint, to obtain the first loss value.

In one embodiment, the computer device determines a weighting coefficient according to the ground truth sample optical flow $F_{t\to l}^P$ and the training optical flow $\bar{F}_{t\to l}^k$ predicted by the highest level of the decoder. The weighting coefficient $P_l$ may be obtained according to the following formula:

$$P_l = \exp\left(-\beta\left|\bar{F}_{t\to l}^k - F_{t\to l}^P\right|_{epe}\right)$$

where $\beta$ is a fixed parameter greater than zero, and l is a video frame sequence. The weighting coefficient $P_l$ may be determined according to a similarity between the training optical flow predicted by the highest level of the decoder and the ground truth sample optical flow. If the similarity is higher, the weighting coefficient $P_l$ at the corresponding position is larger. Otherwise, the weighting coefficient $P_l$ is smaller. An optical flow predicted by the preset neural network can be more accurate by using the weighting coefficient $P_l$, so that the weighting coefficient $P_l$ can be used for improving the accuracy of learning video frame features by the preset neural network.

Further, the computer device determines a scaling factor $u$. The scaling factor $u$ is used for keeping the first training optical flow and the second training optical flow having the same spatial size as the spatial size of the ground truth sample optical flow. For example, up-sampling may be performed on the ground truth sample optical flows to separately scale the ground truth sample optical flows to the same spatial sizes as the spatial sizes of the training optical flows outputted by the various levels of the decoder, thus facilitating the optical flow distillation constraint.

Further, the loss calculation is performed on the weighting coefficient, the scaling factor, the ground truth optical flow, and the training optical flow based on the optical flow distillation constraint, to obtain the first loss value. The first loss value $L_d$ may be obtained according to the following formula:

$$L_d = \sum_{k=1}^{3} \sum_{l=0}^{1} \rho(P_l \odot (u_{2^k}(F_{t \to l}^k) - F_{t \to l}^P))$$

where $\rho$ is a fixed parameter, which can be set according to an actual need of the training process and will not be limited here.

Step S340: Calculate a second loss value based on ground truth sample intermediate frame features and the training intermediate frame feature according to the feature consistency constraint.

In order to enable the preset neural network to obtain more image information from the video frames, during the training of the preset neural network, if feature information of the learned intermediate video frame is closer to feature information of the ground truth sample intermediate frame, it indicates that the intermediate video frame generated by the preset neural network is more realistic, thereby improving the visualization effect of video frame interpolation. Therefore, in some embodiments of the present disclosure, the preset neural network can be trained using the feature consistency constraint.

Step S341: Obtain a parameter sharing encoder.

Step S342: Input the ground truth sample intermediate frame to the parameter sharing encoder to obtain the ground truth sample intermediate frame features corresponding to the various levels of the decoder of the preset neural network.

The parameter sharing encoder refers to an encoder having same parameters as parameters of the encoder of the preset neural network. In one embodiment, the computer device may input the ground truth sample intermediate frame $I_t^{gt}$ into the parameter sharing encoder, and then the convolution blocks of the various levels of the parameter sharing encoder output the corresponding ground truth sample intermediate frame features

$$\grave{\varPhi}_t^k.$$

Step S343: Perform loss calculation on the ground truth sample intermediate frame features and the training intermediate frame feature based on the feature consistency constraint to obtain the second loss value.

In one embodiment, the computer device may perform the feature consistency constraint on the ground truth sample intermediate frame feature

$$\grave{\varPhi}_t^k$$

and the training intermediate frame feature

$$\breve{\varPhi}_t^k,$$

and calculate the second loss value. The second loss value $L_g$ may be obtained according to the following formula:

$$L_g = \sum_{k=1}^{3} L_{cen}(\grave{\varPhi}_t^k, \breve{\varPhi}_t^k)$$

where $L_{cen}$ is the commonly used Census loss function. Considering that excessive constraint will damage information contained in the reconstructed training intermediate frame feature, and inspired by a local geometric alignment characteristic of Census transformation, the feature consistency constraint is expanded, that is, a Census loss is expanded to a multi-scale feature space for progressive supervision, to calculate a Soft Hamming distance between the ground truth sample intermediate frame feature

$$\acute{\varPhi}_t^k$$

and the training intermediate frame feature

$$\breve{\varPhi}_t^k.$$

.

Step S350: Calculate a third loss value according to the ground truth sample intermediate frame and the training intermediate frame.

In order to keep the intermediate video frame $\hat{I}_t$ generated by the preset neural network close to the ground truth sample intermediate frame $I_t^{gt}$, constraint can be carried out between the intermediate video frame and the ground truth sample intermediate frame. In one embodiment, the third loss value $L_r$ is calculated according to the ground truth sample intermediate frame $I_t^{gt}$ and the training intermediate frame $\breve{I}_t$. The third loss value can be obtained according to the following formula:

$$L_r = \rho\big(\breve{I}_t - I_t^{gt}\big) + L_{cen}(\breve{I}_t, I_t^{gt})$$

where $\rho(x) = (x^2 + \varepsilon^2)^\alpha$, $\alpha$, and $\varepsilon$ are fixed parameters that can be set according to an actual need in the training process, and are not limited here.

Step S360: Determine a total loss value of the preset neural network based on the first loss value, the second loss value, and the third loss value, and perform iterative training on the preset neural network according to the total loss value until the preset neural network satisfies a preset condition, to obtain the target neural network.

The preset condition may be as follows: the total loss value is less than a preset value, the total loss value no longer changes, or a number of training times reaches a preset number of times. It can be understood that after the preset neural network is iteratively trained in multiple training cycles according to the training sample set, each training cycle including multiple iterative trainings to continuously optimize the parameters of the preset neural network, the above total loss value is smaller and smaller, and finally decreases to a fixed value or is less than the above preset value. At this time, it indicates that the preset neural network converges. Of course, it can also be determined that the preset neural network has converged after the number of training times reaches the present number of times.

In one embodiment, the total loss value $L = \lambda L_d + \eta L_g + L_r$ ($\lambda$ and $\eta$ are weight parameters) of the preset neural network is determined based on the first loss value $L_d$, the second loss value $L_g$, and the third loss value $L_r$, and the preset neural network is iteratively trained according to the total loss value until the preset neural network satisfies the preset condition, to obtain the target neural network.

For example, in order to evaluate the performance of the video frame interpolation method proposed in the present disclosure, the video frame interpolation method in the present disclosure can be tested and compared, on the same dataset, with other video frame interpolation methods. For example, although the training of the target neural network is carried out on the Vimeo90K training set, the video frame interpolation method proposed in the present disclosure can be evaluated on various datasets covering different motion scenes for comprehensive comparison.

Quantitative evaluation uses common indexes such as PSNR and SSIM. The dataset may include:
The Vimeo90K dataset contains three-frame video frames with a 448 × 256 resolution. 51.312 three-frame video frames are used for training, and 3.782 three-frame video frames are used for testing. Dataset UCF101 can use a test set selected from DVF. The test set includes 379 three-frame video frames with a size of 256×256. Dataset SNU-FILM is a recently proposed VFI benchmark that includes 1240 three-frame video frames with a resolution of about 1280 x720. According to the amplitude of motion, it is divided into four parts: easy, medium, difficult, and extreme.

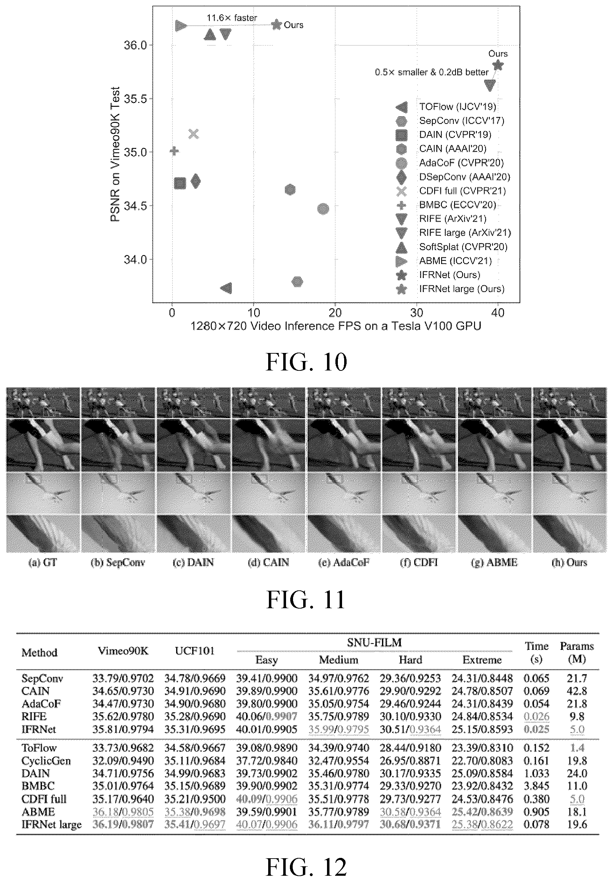

FIG. 10 shows a diagram of speed-effect comparison of a frame interpolation method. The speed is 11.6 times faster on the premise that the video frame interpolation method (IFR-Net/IFR-Net Large) of the present disclosure achieves a frame interpolation effect close to the frame interpolation effects of other video frame interpolation methods. For a 720P video, the video frame interpolation method of the present disclosure can complete frame interpolation on an image on a Nvidia V100 graphics card within 25 milliseconds.

Meanwhile, in some embodiments of the present disclosure, relatively complex cases in some datasets are selected for the video frame interpolation operation, and frame interpolation results of these cases are visualized, for example, a diagram of a visualization effect of video frame interpolation shown in FIG. 11. In case of a relatively large motion, a picture obtained by performing frame interpolation in the video frame interpolation method in the present disclosure is clearer on a motion boundary of an object and contains richer texture details. In addition, on a standard dataset, performance test and comparison are performed between the video frame interpolation method of the present disclosure and other video frame interpolation methods. According to FIG. 12 showing a diagram of a test result of video frame interpolation, it can be seen that the video frame interpolation method (IFR-Net/IFR-Net Large) in the present disclosure achieves the best performance under different evaluation indexes compared to other video frame interpolation methods.

The novel and efficient depth architecture provided in the embodiments of the present disclosure is referred to as IFR-Net, which is used for video frame interpolation, and this depth architecture does not have any cascading refinement units. The depth architecture can gradually refine the optical flow of the intermediate video frame along with the excellent intermediate frame feature, which can not only promote optical flow estimation to synthesize clear motion boundaries, but also provide global representations to generate vivid contextual details. In addition, the new task-oriented optical flow distillation constraint and feature consistency constraint provided by the embodiments of the present disclosure can fully unleash the potential of the IFR-Net. Experiments on various benchmarks have demonstrated that the proposed video frame interpolation method has advanced performance and high inference speed compared to the existing video frame interpolation methods.

Step S370: Obtain a first video frame and a second video frame from a target video, input the first video frame and the second video frame to a pre-trained target neural network, and obtain a target intermediate video frame output by the target neural network.

Step S380: Insert the target intermediate video frame between the first video frame and the second video frame.

In this embodiment, specific implementations of step S370 and step S380 may respectively refer to the explanations of step S110 to step S130 provided in the above embodiments, and will not be repeated here.

Referring to FIG. 13, FIG. 13 shows a structural block diagram of a video processing apparatus 400 provided according to some embodiments of the present disclosure. The video processing apparatus 400 includes: an obtaining module 410, configured to obtain a first video frame and a second video frame in a target video, the first video frame being a previous frame of the second video frame; an outputting module 420, configured to: input the first video frame and the second video frame to a pre-trained target neural network, and obtain a target intermediate video frame output by the target neural network, the target neural network being trained based on an optical flow distillation constraint and a feature consistency constraint; and a frame interpolation module 430, configured to insert the target intermediate video frame between the first video frame and the second video frame.

In some embodiments, the target neural network includes an encoder and a decoder, and the outputting module 430 may include: a target feature generation unit, configured to input the first video frame and the second video frame to the encoder to obtain a first target feature corresponding to the first video frame and a second target feature corresponding to the second video frame; a target optical flow generation unit, configured to input the first target feature and the second target feature to the decoder to obtain a first target optical flow and a second target optical flow; and target video frame generation unit, configured to generate the target intermediate video frame according to the first target optical flow and the second target optical flow.

In some embodiments, the encoder includes four levels; and the target feature generation unit may include: a first feature generation subunit configured to input the first video frame and the second video frame to a first level of the encoder to obtain a first feature corresponding to the first video frame and a second feature corresponding to the second video frame; a second feature generation subunit, configured to input the first feature and the second feature to a second level of the encoder to obtain a third feature corresponding to the first video frame and a fourth feature corresponding to the second video frame; a third feature generation subunit, configured to input the third feature and the fourth feature to a third level of the encoder to obtain a fifth feature corresponding to the first video frame and a sixth feature corresponding to the second video frame; and a fourth feature generation subunit, configured to input the fifth feature and the sixth feature to a fourth level of the encoder to obtain the first target feature corresponding to the first video frame and the second target feature corresponding to the second video frame.

In some embodiments, the target feature generation unit may include: a first feature transformation subunit, configured to perform a transformation operation on the first feature and the second feature of the first level to obtain a first transformed feature and a second transformed feature; a second feature transformation subunit, configured to perform a transformation operation on the third feature and the fourth feature of the second level to obtain a third transformed feature and a fourth transformed feature; and a third feature transformation subunit, configured to perform a transformation operation on the fifth feature and the sixth feature of the third level to obtain a fifth transformed feature and a sixth transformed feature.

In some embodiments, the decoder includes four levels; and the target optical flow generation unit may include: a first optical flow generation subunit, configured to input the first target feature and the second target feature outputted from the fourth level of the encoder to a fourth level of the decoder to obtain a first optical flow, a second optical flow, and a first intermediate frame feature; a second optical flow generation subunit, configured to input the first optical flow, the second optical flow, the first intermediate frame feature, the fifth transformed feature, and the sixth transformed feature to a three level of the decoder to obtain a third optical flow, a fourth optical flow, and a second intermediate frame feature; a third optical flow generation subunit, configured to input the third optical flow, the fourth optical flow, the second intermediate frame feature, the third transformed feature, and the fourth transformed feature to a second level of the decoder to obtain a fifth optical flow, a sixth optical flow, and a third intermediate frame feature; and a fourth optical flow generation subunit, configured to input the fifth optical flow, the sixth optical flow, the third intermediate frame feature, the first transformed feature, and the second transformed feature to a first level of the decoder to obtain the first target optical flow and the second target optical flow.

In some embodiments, the target optical flow generation unit may be specifically configured to input the first target feature and the second target feature to the decoder to obtain the first target optical flow, the second target optical flow, an integration parameter, and a residual.

The target video frame generation unit may include: a candidate frame generation subunit, configured to generate a first candidate video frame and a second candidate video frame according to the first target optical flow, the second target optical flow, the first video frame, and the second video frame; and a target intermediate video frame generation subunit, configured to generate the target intermediate video frame based on the first candidate video frame, the second candidate video frame, the integration parameter, and the residual.

In some embodiments, the candidate frame generation subunit may be specifically configured to: perform the transformation operation on the first target optical flow and the first video frame to obtain the first candidate video frame; and perform the transformation operation on the second target optical flow and the second video frame to obtain the second candidate video frame.

In some embodiments, the video processing apparatus 400 may further include: a sample obtaining module, configured to obtain a first sample video frame and a second sample video frame from a video to be trained; a training feature generation module, configured to input the first sample video frame and the second sample video frame to the encoder of the preset neural network to obtain a first training feature and a second training feature; a training optical flow generation module, configured to input the first training feature and the second training feature to the decoder of the preset neural network to generate a training optical flow and a training intermediate frame feature; a first loss calculation module, configured to calculate a first loss value based on a ground truth sample optical flow and the training optical flow according to the optical flow distillation constraint; a second loss calculation module, configured to calculate a second loss value based on ground truth sample intermediate frame features and the training intermediate frame feature according to the feature consistency constraint; a third loss calculation module, configured to calculate a third loss value according to the ground truth sample intermediate frame and the training intermediate frame; a loss determining module, configured to determine a total loss value of the preset neural network based on the first loss value, the second loss value, and the third loss value; and a network training module, configured to perform iterative training on the preset neural network according to the total loss value until the preset neural network satisfies a preset condition, to obtain the target neural network.

In some embodiments, the first loss calculation module may include: a sample obtaining unit, configured to obtain a ground truth sample video frame, the ground truth sample video frame including a ground truth sample intermediate frame and two video frames adj acent to the ground truth sample intermediate frame; a sample optical flow calculation unit, configured to input the ground truth sample video frame to a preset optical flow network to calculate a ground truth sample optical flow; and a first loss calculation unit, configured to perform loss calculation on the ground truth sample optical flow and the training optical flow based on the optical flow distillation constraint, to obtain the first loss value.

In some embodiments, the first loss calculation unit may be specifically configured to: determine a weighting coefficient according to the ground truth sample optical flow and the training optical flow, the weighting coefficient being used for improving accuracy of the preset neural network in learning video frame features; determine a scaling factor, the scaling factor being used for scaling the ground truth sample optical flow to a same spatial size as a spatial size of the training optical flow; and perform loss calculation on the weighting coefficient, the scaling factor, the ground truth sample optical flow, and the training optical flow based on the optical flow distillation constraint, to obtain the first loss value.

In some embodiments, the second loss calculation module may be specifically configured to: obtain a parameter sharing encoder; input the ground truth sample intermediate frame to the parameter sharing encoder to obtain the ground truth sample intermediate frame features corresponding to the various levels of the decoder of the preset neural network; and perform loss calculation on the ground truth sample intermediate frame features and the training intermediate frame feature based on the feature consistency constraint, to obtain the second loss value.

A person skilled in the art can clearly understand that, for simple and clear description, for specific work processes of the foregoing described apparatus and modules, please refer to the corresponding process in the foregoing method embodiments, and details are not described here again.

In the several embodiments provided in the present disclosure, coupling of modules to one another may be electrical, mechanical or otherwise.

In addition, functional modules in the embodiments of in the present disclosure may be integrated into one processing module, or each of the modules may exist alone physically, or two or more modules are integrated into one module. The integrated module may be implemented in a form of hardware, or may be implemented in a form of a software functional module.

According to the solutions provided in the present disclosure, a computer device can obtain a first video frame and a second video frame from a target video, input the first video frame and the second video frame to a pre-trained target neural network, and obtain a target intermediate video frame output by the target neural network. The target neural network is trained based on an optical flow distillation constraint and a feature consistency constraint. Further, the computer device can insert the target intermediate video frame between the first video frame and the second video frame. Therefore, knowledge of a pre-trained optical flow network is transferred to learning of the target neural network through the optical flow distillation constraint, thereby eliminating dependency on an external optical flow network. In addition, the network can learn more intermediate frame information through the feature consistency constraint, thereby improving the efficiency of generating an optical flow from an intermediate frame to an adjacent frame.

As shown in FIG. 14, the embodiments of the present disclosure further provide a computer device 500. The computer device 500 may include components such as a processor 501 with one or more processing cores, a memory 502 with one or more computer-readable storage media, a power supply 503, and an input unit 504. A person of skill in the art can understand that, a structure of the computer device shown in FIG. 6 does not constitute a limit on the computer device, and may include components that are more or fewer than those shown in the figure, or a combination of some components, or different component arrangements.

The processor 501 is a control center of the computer device, and connects to various parts of the entire computer device by using various interfaces and lines. By running or executing software programs and/or modules stored in the memory 502, and invoking data stored in the memory 502, various functions and data processing of the computer device are executed, thereby performing overall monitoring on the computer device. In some embodiments, the processor 501 may include one or more processing cores. In some embodiments, the processor 501 may integrate an application processor and a modem. The application processor mainly processes an operating system, a user interface, an application program, and the like. The modem mainly processes wireless communication. It is understood that the foregoing modem may not be integrated into the processor 501.

The memory 502 may be configured to store software programs and modules. The processor 501 runs the software programs and modules stored in the memory 502, to implement various functional applications and data processing. The memory 502 may mainly include a program storage area and a data storage area. The program storage area may store an operating system, an application program required by at least one function (such as a sound playback function and an image display function), and the like. The data storage area may store data created according to use of a server. In addition, the memory 502 may include a high speed RAM, and may further include a non-volatile memory, such as at least one magnetic disk storage device, a flash memory, or another volatile solid storage device. Correspondingly, the memory 502 may further include a memory controller, so that the processor 501 can access the memory 502.

The computer device further includes the power supply 503 for supplying power to the components. In some embodiments, the power supply 503 may be logically connected to the processor 501 by using a power management system, thereby implementing functions such as charging, discharging, and power consumption management by using the power management system. The power supply 503 may further include one or more direct current or alternating current power supplies, a re-charging system, a power failure detection circuit, a power supply converter or inverter, a power supply state indicator, and any other component.

The computer device may further include the input unit 504. The input unit 504 may be configured to receive inputted numeric or character information and generate keyboard, mouse, joystick, optical, or trackball signal input related to user settings and function control.

Although not shown in the figure, the computer device may further include a display unit, and the like. Details are not described here again. Specifically, in this embodiment, the processor 501 in the computer device may load, according to the following instructions, executable files corresponding to processes of one or more application programs into the memory 502. The processor 501 runs the application programs stored in the memory 502, to implement the steps of the various methods provided in the foregoing embodiments.

As shown in FIG. 15, the embodiments of the present disclosure further provide a computer-readable storage medium 600. The computer-readable storage medium 600 stores computer program instructions 610. The computer program instructions 610 may be invoked by a processor to implement the methods described in the foregoing embodiments.

The computer-readable storage medium may be an electronic memory such as a flash memory, an Electrically Erasable Programmable Read Only Memory (EEPROM), an Erasable Programmable Read Only Memory (EPROM), a hard disk, or a ROM. In some embodiments, the computer readable storage medium includes a non-transitory computer-readable storage medium. The computer-readable storage medium 600 has a storage space for program codes that implement any of the steps in the above method. These program codes can be read from or written to one or more computer program products. The program codes can be compressed in an appropriate form, for example.

According to one aspect of the present disclosure, a computer program product or a computer program is provided. The computer program product or the computer program includes computer instructions stored in a computer-readable storage medium. A processor of a computer device reads the computer instructions from the computer-readable storage medium and executes the computer instructions, causing the computer device to implement the method provided in any example implementations provided in the above embodiments.

All the technical features of the above embodiments can be combined randomly in different manners to form other embodiments. For the sake of brevity, not all possible combinations of all the technical features in the above embodiments are described. However, these technical features shall all be considered to fall within the scope of this specification as long as there is no contradiction in their combinations.

Descriptions above are merely preferred embodiments of the present disclosure, and are not intended to limit the present disclosure. Although the present disclosure has been disclosed above in forms of preferred embodiments, the embodiments are not intended to limit the present disclosure. A person skilled in the art can make some changes to the above disclosed technical content without departing from the scope of the technical solutions of the present disclosure or can modify the technical content as equivalent embodiments with equivalent changes. Any simple alteration, equivalent change or modification made to the foregoing embodiments according to the technical essence of the present disclosure without departing from the content of the technical solutions of the present disclosure shall fall within the scope of the technical solutions of the present disclosure.

## Claims

1. A video processing method, executable by a computer device, and **characterized by** comprising:

   obtaining a first video frame and a second video frame in a target video, the first video frame being a previous frame of the second video frame;
   inputting the first video frame and the second video frame to a pre-trained target neural network, and obtaining a target intermediate video frame output by the target neural network, the target neural network being trained based on an optical flow distillation constraint and a feature consistency constraint, the optical flow distillation constraint being a constraint established between optical flows of intermediate video frames generated by the target neural network and optical flows of ground truth sample intermediate video frames, and the feature consistency constraint being a constraint established between features of the intermediate video frames and features of the ground truth sample intermediate video frames; and
   inserting the target intermediate video frame between the first video frame and the second video frame.

2. The method according to claim 1, **characterized in that** the target neural network comprises an encoder and a decoder; and the inputting the first video frame and the second video frame to a pre-trained target neural network, and obtaining a target intermediate video frame output by the target neural network comprises:

   inputting the first video frame and the second video frame to the encoder to obtain a first target feature corresponding to the first video frame and a second target feature corresponding to the second video frame;
   inputting the first target feature and the second target feature to the decoder to obtain a first target optical flow and a second target optical flow; and
   generating the target intermediate video frame according to the first target optical flow and the second target optical flow.

3. The method according to claim 2, **characterized in that** the encoder comprises four levels; and the inputting the first video frame and the second video frame to the encoder to obtain a first target feature corresponding to the first video frame and a second target feature corresponding to the second video frame comprises:

inputting the first video frame and the second video frame to a first level of the encoder to obtain a first feature corresponding to the first video frame and a second feature corresponding to the second video frame;

inputting the first feature and the second feature to a second level of the encoder to obtain a third feature corresponding to the first video frame and a fourth feature corresponding to the second video frame;

inputting the third feature and the fourth feature to a third level of the encoder to obtain a fifth feature corresponding to the first video frame and a sixth feature corresponding to the second video frame; and

inputting the fifth feature and the sixth feature to a fourth level of the encoder to obtain the first target feature corresponding to the first video frame and the second target feature corresponding to the second video frame.

4. The method according to claim 3, **characterized by** further comprising:

performing a transformation operation on the first feature and the second feature of the first level to obtain a first transformed feature and a second transformed feature;

performing a transformation operation on the third feature and the fourth feature of the second level to obtain a third transformed feature and a fourth transformed feature; and

performing a transformation operation on the fifth feature and the sixth feature of the third level to obtain a fifth transformed feature and a sixth transformed feature.

5. The method according to claim 4, **characterized in that** the decoder comprises four levels; and the inputting the first target feature and the second target feature to the decoder to obtain a first target optical flow and a second target optical flow comprises:

inputting the first target feature and the second target feature outputted from the fourth level of the encoder to a fourth level of the decoder to obtain a first optical flow, a second optical flow, and a first intermediate frame feature;

inputting the first optical flow, the second optical flow, the first intermediate frame feature, the fifth transformed feature, and the sixth transformed feature to a three level of the decoder to obtain a third optical flow, a fourth optical flow, and a second intermediate frame feature;

inputting the third optical flow, the fourth optical flow, the second intermediate frame feature, the third transformed feature, and the fourth transformed feature to a second level of the decoder to obtain a fifth optical flow, a sixth optical flow, and a third intermediate frame feature; and

inputting the fifth optical flow, the sixth optical flow, the third intermediate frame feature, the first transformed feature, and the second transformed feature to a first level of the decoder to obtain the first target optical flow and the second target optical flow.

6. The method according to any one of claims 2 to 5, **characterized in that** the inputting the first target feature and the second target feature to the decoder to obtain a first target optical flow and a second target optical flow comprises:

inputting the first target feature and the second target feature to the decoder to obtain the first target optical flow, the second target optical flow, an integration parameter, and a residual; and

the generating the target intermediate video frame according to the first target optical flow and the second target optical flow comprises:

generating a first candidate video frame and a second candidate video frame according to the first target optical flow, the second target optical flow, the first video frame, and the second video frame; and

generating the target intermediate video frame based on the first candidate video frame, the second candidate video frame, the integration parameter, and the residual.

7. The method according to claim 6, **characterized in that** the generating a first candidate video frame and a second candidate video frame according to the first target optical flow, the second target optical flow, the first video frame, and the second video frame comprises:

performing the transformation operation on the first target optical flow and the first video frame to obtain the first candidate video frame; and

performing the transformation operation on the second target optical flow and the second video frame to obtain the second candidate video frame.

8. The method according to claim 1, **characterized by** further comprising:

obtaining a first sample video frame and a second sample video frame from a video to be trained;
inputting the first sample video frame and the second sample video frame to the encoder of the preset neural network to obtain a first training feature and a second training feature;
inputting the first training feature and the second training feature to the decoder of the preset neural network to generate a training optical flow and a training intermediate frame feature;
calculating a first loss value based on a ground truth sample optical flow and the training optical flow according to the optical flow distillation constraint;
calculating a second loss value based on ground truth sample intermediate frame features and the training intermediate frame feature according to the feature consistency constraint;
calculating a third loss value according to the ground truth sample intermediate frame and the training intermediate frame;
determining a total loss value of the preset neural network based on the first loss value, the second loss value, and the third loss value; and
performing iterative training on the preset neural network according to the total loss value until the preset neural network satisfies a preset condition, to obtain the target neural network.

9. The method according to claim 8, **characterized in that** the calculating a first loss value based on a ground truth sample optical flow and the training optical flow according to the optical flow distillation constraint comprises:

obtaining a ground truth sample video frame, the ground truth sample video frame comprising a ground truth sample intermediate frame and two video frames adj acent to the ground truth sample intermediate frame;
inputting the ground truth sample video frame to a preset optical flow network to calculate a ground truth sample optical flow; and
performing loss calculation on the ground truth sample optical flow and the training optical flow based on the optical flow distillation constraint, to obtain the first loss value.

10. The method according to claim 9, **characterized in that** the performing loss calculation on the ground truth sample optical flow and the training optical flow based on the optical flow distillation constraint, to obtain the first loss value comprises:

determining a weighting coefficient according to the ground truth sample optical flow and the training optical flow, the weighting coefficient being configured to improve accuracy of the preset neural network in learning video frame features;
determining a scaling factor, the scaling factor being configured to scale the ground truth sample optical flow to a same spatial size as a spatial size of the training optical flow; and
performing loss calculation on the weighting coefficient, the scaling factor, the ground truth optical flow, and the training optical flow based on the optical flow distillation constraint, to obtain the first loss value.

11. The method according to claim 8, **characterized in that** the calculating a second loss value based on ground truth sample intermediate frame features and the training intermediate frame feature according to the feature consistency constraint comprises:

obtaining a parameter sharing encoder;
inputting the ground truth sample intermediate frame to the parameter sharing encoder to obtain the ground truth sample intermediate frame features corresponding to the various levels of the decoder of the preset neural network; and
performing loss calculation on the ground truth sample intermediate frame features and the training intermediate frame feature based on the feature consistency constraint, to obtain the second loss value.

12. A video processing apparatus, **characterized by** comprising:

an obtaining module, configured to obtain a first video frame and a second video frame in a target video, the first video frame being a previous frame of the second video frame;
an outputting module, configured to: input the first video frame and the second video frame to a pre-trained target neural network, and obtain a target intermediate video frame output by the target neural network, the target neural network being trained based on an optical flow distillation constraint and a feature consistency constraint, the optical flow distillation constraint being a constraint established between optical flows of intermediate video frames generated by the target neural network and optical flows of ground truth sample intermediate video frames, and the feature consistency constraint being a constraint established between features of the intermediate video frames and features of the ground truth sample intermediate video frames; and

a frame interpolation module, configured to insert the target intermediate video frame between the first video frame and the second video frame.

**13.** The apparatus according to claim 12, **characterized in that** the target neural network comprises an encoder and a decoder, and the outputting module comprises:

a target feature generation unit, configured to input the first video frame and the second video frame to the encoder to obtain a first target feature corresponding to the first video frame and a second target feature corresponding to the second video frame;

a target optical flow generation unit, configured to input the first target feature and the second target feature to the decoder to obtain a first target optical flow and a second target optical flow; and

target video frame generation unit, configured to generate the target intermediate video frame according to the first target optical flow and the second target optical flow.

**14.** The apparatus according to claim 13, **characterized in that** the encoder comprises four levels; and the target feature generation unit comprises:

a first feature generation subunit configured to input the first video frame and the second video frame to a first level of the encoder to obtain a first feature corresponding to the first video frame and a second feature corresponding to the second video frame;

a second feature generation subunit, configured to input the first feature and the second feature to a second level of the encoder to obtain a third feature corresponding to the first video frame and a fourth feature corresponding to the second video frame;

a third feature generation subunit, configured to input the third feature and the fourth feature to a third level of the encoder to obtain a fifth feature corresponding to the first video frame and a sixth feature corresponding to the second video frame; and

a fourth feature generation subunit, configured to input the fifth feature and the sixth feature to a fourth level of the encoder to obtain the first target feature corresponding to the first video frame and the second target feature corresponding to the second video frame.

**15.** The apparatus according to claim 14, **characterized in that** the target feature generation unit comprises:

a first feature transformation subunit, configured to perform a transformation operation on the first feature and the second feature of the first level to obtain a first transformed feature and a second transformed feature;

a second feature transformation subunit, configured to perform a transformation operation on the third feature and the fourth feature of the second level to obtain a third transformed feature and a fourth transformed feature; and

a third feature transformation subunit, configured to perform a transformation operation on the fifth feature and the sixth feature of the third level to obtain a fifth transformed feature and a sixth transformed feature.

**16.** The apparatus according to any one of claims 13 to 15, **characterized in that**

the target optical flow generation unit is configured to input the first target feature and the second target feature to the decoder to obtain the first target optical flow, the second target optical flow, an integration parameter, and a residual; and

the target video frame generation unit comprises:

a candidate frame generation subunit, configured to generate a first candidate video frame and a second candidate video frame according to the first target optical flow, the second target optical flow, the first video frame, and the second video frame, and

a target intermediate video frame generation subunit, configured to generate the target intermediate video frame based on the first candidate video frame, the second candidate video frame, the integration parameter, and the residual.

**17.** The apparatus according to claim 12, **characterized by** further comprising:

a sample obtaining module, configured to obtain a first sample video frame and a second sample video frame from a video to be trained;

a training feature generation module, configured to input the first sample video frame and the second sample video frame to the encoder of the preset neural network to obtain a first training feature and a second training feature;

a training optical flow generation module, configured to input the first training feature and the second training feature to the decoder of the preset neural network to generate a training optical flow and a training intermediate frame feature;

a first loss calculation module, configured to calculate a first loss value based on a ground truth sample optical flow and the training optical flow according to the optical flow distillation constraint;

a second loss calculation module, configured to calculate a second loss value based on ground truth sample intermediate frame features and the training intermediate frame feature according to the feature consistency constraint;

a third loss calculation module, configured to calculate a third loss value according to the ground truth sample intermediate frame and the training intermediate frame;

a loss determining module, configured to determine a total loss value of the preset neural network based on the first loss value, the second loss value, and the third loss value; and

a network training module, configured to: perform iterative training on the preset neural network according to the total loss value until the preset neural network satisfies a preset condition, to obtain the target neural network.

18. A computer device, **characterized by** comprising:

a memory;

one or more processors, coupled to the memory; and

one or more application programs, the one or more application programs being stored in the memory and configured to be executed by the one or more processors, and the one or more application programs being configured to implement the video processing method according to any one of claims 1 to 11.

19. A computer-readable storage medium, **characterized by** storing program codes, the program codes being invoked by a processor to implement the video processing method according to any one of claims 1 to 11.

20. A computer program product or a computer program, **characterized by** the computer program product or the computer program comprising computer instructions, the computer instructions being stored in a storage medium, a processor of a computer device reading the computer instructions from the storage medium, and the processor executing the computer instructions to cause the computer to implement the video processing method according to any one of claims 1 to 11.

Obtain a first video frame and a second video frame from a target video    S110

Input the first video frame and the second video frame to a pre-trained target neural network, and obtain a target intermediate video frame output by the target neural network    S120

Insert the target intermediate video frame between the first video frame and the second video frame    S130

## FIG. 1

Obtain a first video frame and a second video frame from a target video    S210

Input the first video frame and the second video frame to the encoder to obtain a first target feature corresponding to the first video frame and a second target feature corresponding to the second video frame    S220

Perform a transformation operation on the features obtained at the first level to the third level of the encoder to obtain corresponding transformed features    S230

Input the first target feature and the second target feature to the decoder to obtain a first target optical flow and a second target optical flow    S240

Generate a first candidate video frame and a second candidate video frame according to the first target optical flow, the second target optical flow, the first video frame, and the second video frame    S250

Generate the target intermediate video frame based on the first candidate video frame, the second candidate video frame, the integration parameter, and the residual    S260

Insert the target intermediate video frame between the first video frame and the second video frame    S270

## FIG. 2

FIG. 3

EP 4 447 465 A1

| Input the first video frame and the second video frame to a first level of the encoder to obtain a first feature corresponding to the first video frame and a second feature corresponding to the second video frame | S221 |

| Input the first feature and the second feature to a second level of the encoder to obtain a third feature corresponding to the first video frame and a fourth feature corresponding to the second video frame | S222 |

| Input the third feature and the fourth feature to a third level of the encoder to obtain a fifth feature corresponding to the first video frame and a sixth feature corresponding to the second video frame | S223 |

| Input the fifth and sixth features into the fourth level of the encoder to obtain the first target feature corresponding to the first video frame and the second target feature corresponding to the second video frame | S224 |

## FIG. 4

| Input the first target feature and the second target feature outputted from the fourth level of the encoder to a fourth level of the decoder to obtain a first optical flow, a second optical flow, and a first intermediate frame feature | S241 |

| Input the first optical flow, the second optical flow, the first intermediate frame feature, the fifth transformed feature, and the sixth transformed feature to a three-level of the decoder to obtain a third optical flow, a fourth optical flow, and a second intermediate frame feature | S242 |

| Input the third optical flow, the fourth optical flow, the second intermediate frame feature, the third transformed feature, and the fourth transformed feature to a second level of the decoder to obtain a fifth optical flow, a sixth optical flow, and a third intermediate frame feature | S243 |

| Input the fifth optical flow, the sixth optical flow, the third intermediate frame feature, the first transformed feature, and the second transformed feature to a first level of the decoder to obtain the first target optical flow and the second target optical flow | S244 |

## FIG. 5

Perform the transformation operation on the first target optical flow and the first video frame to obtain the first candidate video frame ⟋ S251

Perform the transformation operation on the second target optical flow and the second video frame to obtain the second candidate video frame ⟋ S252

## FIG. 6

Obtain a first sample video frame and a second sample video frame from a to-be-trained video, input the first sample video frame and the second sample video frame to the encoder of the preset neural network to obtain a first training feature and a second training feature ⟋ S310

Input the first training feature and the second training feature to the decoder of the preset neural network to generate a training optical flow and a training intermediate frame feature ⟋ S320

Calculate a first loss value on the basis of a true sample optical flow and the training optical flow according to the optical flow distillation ⟋ S330

Calculate a second loss value on the basis of true sample intermediate frame features and the training intermediate frame feature according to the feature consistency constraint ⟋ S340

Calculate a third loss value according to the true sample intermediate frame and the training intermediate frame ⟋ S350

Determine a total loss value of the preset neural network on the basis of the first loss value, the second loss value, and the third loss value, and perform iterative training on the preset neural network according to the total loss value until the preset neural network satisfies a preset condition, to obtain the target neural network ⟋ S360

Obtain a first video frame and a second video frame from a target video, input the first video frame and the second video frame to a pre-trained target neural network, and output a target intermediate video frame ⟋ S370

Insert the target intermediate video frame between the first video frame and the second video frame ⟋ S380

## FIG. 7

Obtain a true sample video frame $\quad$ S331

Input a true sample intermediate frame to a preset optical flow network to calculate a true sample optical flow $\quad$ S332

Perform loss calculation on the true sample optical flow and the training optical flow on the basis of the optical flow distillation constraint, to obtain the first loss value $\quad$ S333

FIG. 8

Obtain a parameter sharing encoder $\quad$ S341

Input the true sample intermediate frame to the parameter sharing encoder to obtain the true sample intermediate frame features corresponding to the various levels of the decoder of the preset neural network $\quad$ S342

Perform loss calculation on the true sample intermediate frame features and the training intermediate frame feature on the basis of the feature consistency constraint to obtain the second loss value $\quad$ S343

FIG. 9

FIG. 10

(a) GT    (b) SepConv    (c) DAIN    (d) CAIN    (e) AdaCoF    (f) CDFI    (g) ABME    (h) Ours

FIG. 11

| Method | Vimeo90K | UCF101 | SNU-FILM | | | | Time (s) | Params (M) |
|--------|----------|--------|----------|--------|--------|---------|----------|------------|
| | | | Easy | Medium | Hard | Extreme | | |
| SepConv | 33.79/0.9702 | 34.78/0.9669 | 39.41/0.9900 | 34.97/0.9762 | 29.36/0.9253 | 24.31/0.8448 | 0.065 | 21.7 |
| CAIN | 34.65/0.9730 | 34.91/0.9690 | 39.89/0.9900 | 35.61/0.9776 | 29.90/0.9292 | 24.78/0.8507 | 0.069 | 42.8 |
| AdaCoF | 34.47/0.9730 | 34.90/0.9680 | 39.80/0.9900 | 35.05/0.9754 | 29.46/0.9244 | 24.31/0.8439 | 0.054 | 21.8 |
| RIFE | 35.62/0.9780 | 35.28/0.9690 | 40.06/0.9907 | 35.75/0.9789 | 30.10/0.9330 | 24.84/0.8534 | 0.026 | 9.8 |
| IFRNet | 35.81/0.9794 | 35.31/0.9695 | 40.01/0.9905 | 35.99/0.9795 | 30.51/0.9364 | 25.15/0.8593 | 0.025 | 5.0 |
| ToFlow | 33.73/0.9682 | 34.58/0.9667 | 39.08/0.9890 | 34.39/0.9740 | 28.44/0.9180 | 23.39/0.8310 | 0.152 | 1.4 |
| CyclicGen | 32.09/0.9490 | 35.11/0.9684 | 37.72/0.9840 | 32.47/0.9554 | 26.95/0.8871 | 22.70/0.8083 | 0.161 | 19.8 |
| DAIN | 34.71/0.9756 | 34.99/0.9683 | 39.73/0.9902 | 35.46/0.9780 | 30.17/0.9335 | 25.09/0.8584 | 1.033 | 24.0 |
| BMBC | 35.01/0.9764 | 35.15/0.9689 | 39.90/0.9902 | 35.31/0.9774 | 29.33/0.9270 | 23.92/0.8432 | 3.845 | 11.0 |
| CDFI full | 35.17/0.9640 | 35.21/0.9500 | 40.09/0.9906 | 35.51/0.9778 | 29.73/0.9277 | 24.53/0.8476 | 0.380 | 5.0 |
| ABME | 36.18/0.9805 | 35.38/0.9698 | 39.59/0.9901 | 35.77/0.9789 | 30.58/0.9364 | 25.42/0.8639 | 0.905 | 18.1 |
| IFRNet large | 36.19/0.9807 | 35.41/0.9697 | 40.07/0.9906 | 36.11/0.9797 | 30.68/0.9371 | 25.38/0.8622 | 0.078 | 19.6 |

FIG. 12

400

Video processing apparatus

410 — Obtaining module

Frame interpolation module — 430

Outputting module

420

FIG. 13

500

501 — 

Processor

503 — Power supply

502 — Memory

504 — Input unit

FIG. 14

600

Computer-readable storage medium

to implement program codes of various steps in the method
embodiment according to this application

610

FIG. 15

30

Terminal

40

Terminal

50

Terminal

20

10

Server

FIG. 16

## INTERNATIONAL SEARCH REPORT

| International application No. |
|---|
| **PCT/CN2022/124567** |

**A. CLASSIFICATION OF SUBJECT MATTER**

H04N 21/4402(2011.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNKI, CNABS, CNTXT, VEN, USTXT, WOTXT, EPTXT: 视频帧, 中间帧, 神经网络, 光流, 蒸馏约束, 一致性, 插帧, 编码, 解码, 层级, 变换, 候选, 损失值, 加权, 缩放, video, frame, neural network, intermediate, insert, optical, flow, distillation, constraint, consistency, encode, decode, level, translate, transform, candidate, loss value, weighting, zoom

**C. DOCUMENTS CONSIDERED TO BE RELEVANT**

| Category* | Citation of document, with indication, where appropriate, of the relevant passages | Relevant to claim No. |
|---|---|---|
| PX | CN 114339409 A (TENCENT TECHNOLOGY (BEIJING) COMPANY LIMITED) 12 April 2022 (2022-04-12)<br>claims 1-15, and description, paragraphs 0150-0164 | 1-20 |
| X | CN 112104830 A (BEIJING MEGVII TECHNOLOGY CO., LTD.) 18 December 2020 (2020-12-18)<br>description, paragraphs 0067-0242 | 1, 2, 12, 18-20 |
| A | US 2021327031 A1 (TSINGHUA SHENZHEN INT GRADUATE SCHOOL et al.) 21 October 2021 (2021-10-21)<br>entire document | 1-20 |
| A | US 2019273948 A1 (INTEL CORP.) 05 September 2019 (2019-09-05)<br>entire document | 1-20 |
| A | CN 113542651 A (BEIJING MEGVII TECHNOLOGY CO., LTD.) 22 October 2021 (2021-10-22)<br>entire document | 1-20 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **20 December 2022** | **10 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/124567**

C.     DOCUMENTS CONSIDERED TO BE RELEVANT

| Category* | Citation of document, with indication, where appropriate, of the relevant passages | Relevant to claim No. |
|---|---|---|
| A | CN 113365110 A (BEIJING BAIDU NETCOM SCIENCE AND TECHNOLOGY CO., LTD.) 07 September 2021 (2021-09-07) entire document | 1-20 |

Form PCT/ISA/210 (second sheet) (January 2015)

**INTERNATIONAL SEARCH REPORT**
**Information on patent family members**

International application No.

**PCT/CN2022/124567**

| Patent document cited in search report | | | Publication date (day/month/year) | Patent family member(s) | | | Publication date (day/month/year) |
|---|---|---|---|---|---|---|---|
| CN | 114339409 | A | 12 April 2022 | None | | | |
| CN | 112104830 | A | 18 December 2020 | None | | | |
| US | 2021327031 | A1 | 21 October 2021 | WO | 2021208122 | A1 | 21 October 2021 |
| US | 2019273948 | A1 | 05 September 2019 | US | 2021250620 | A1 | 12 August 2021 |
| | | | | DE | 102019218837 | A1 | 09 July 2020 |
| CN | 113542651 | A | 22 October 2021 | None | | | |
| CN | 113365110 | A | 07 September 2021 | None | | | |

Form PCT/ISA/210 (patent family annex) (January 2015)

REFERENCES CITED IN THE DESCRIPTION

**Patent documents cited in the description**

• CN 202111500576